# EUROPÄISCHE PATENTSCHRIFT

(11) **EP 1 703 063 B1**
(45) Veröffentlichungstag und Bekanntmachung des Hinweises auf die Patenterteilung: **19.11.2014**
(21) Anmeldenummer: 06002029.4
(22) Anmeldetag: 01.02.2006
(51) Int. Cl.: E06B 7/28

(54) **Fensterprofil mit Solar-Element**
Window section with solar element
Profilé de fenêtre avec un élément solaire

(30) Priorität: 16.02.2005 AT 2472005
(43) Veröffentlichungstag der Anmeldung: 20.09.2006
(73) Patentinhaber: IFN-Holding AG, 4050 Traun (AT)
(72) Erfinder: Seibt, Christian, Ing., 4050 Traun (AT)
(74) Vertreter: Ofner, Clemens

(56) Entgegenhaltungen:
- EP-A- 0 287 994
- DE-A1- 10 015 881
- DE-A1- 10 127 795

## Beschreibung

Die Erfindung betrifft ein Fensterprofil mit einem Profilkörper und zumindest einem Photovoltaikelement und gegebenenfalls einem Solarmodul, das auf dem oder zumindest teilweise in dem oder zumindest teilweise innerhalb des Profilkörper(s) angeordnet ist, wobei der Profilkörper als Hohlkammerprofil mit zumindest einer Hohlkammer ausgebildet ist. Weiter betrifft die Erfindung ein Fenster mit einem Glaselement und zumindest einem Fensterprofil.

Fenster eines Gebäudes sind naturgemäß zumindest an ihrer äußeren Oberfläche der Sonne ausgesetzt. Es wurde daher im Stand der Technik bereits versucht, diese Flächen zur Gewinnung von Energie zu nutzen.

So ist z.B. aus der DE 100 10 257 A ein transparentes Solarfenster für die Erzeugung des in Häusern benötigten Stromes bekannt, bei dem die Fensterscheibe aus zwei Schichten, eine nach Außen zugewandte transparente Solarschicht, die durch Sonnenwärme Strom erzeugt und eine nach Innen zugewandte wärmedämmende, transparente Schicht, die den Wärmeaustausch zwischen der Luft im Haus und der Luft draußen verhindert, zusammengesetzt ist.

Obwohl die Solarschicht bei diesen bekannten Fenstern transparent ausgeführt ist, bedingt sie dennoch eine Einbuße im Hinblick auf die Lichtdurchlässigkeit bzw. die Durchsicht.

Aus der DE 101 27 795 A1 ist ein Fenster bekannt, mit wenigstens einer energieverbrauchenden Vorrichtung. Die Energie wird über eine Einrichtung zur Verfügung gestellt, die ausschließlich an oder in dem Fenster angeordnet ist. Die Energie zur Verfügung stellende Einrichtung umfasst wenigstens eine Solarzelle.

Aus der EP 0 287 994 A ist ein beheizbares Fensterfassadenelement bekannt, mit einem Rahmen und zwei oder mehreren hintereinander gelagerten Scheiben. Die Innenscheibe wird beheizt und der Rahmen wird durch thermisch getrennte Profile gebildet, wodurch der K-Wert der Fensterfläche verbessert wird. Die Beheizung erfolgt mittels im Scheibenzwischenraum befindlicher Heizelemente und mittels an der Innenscheibe angebrachter ober in ihr eingegossener Heizelemente. Die Heizelemente können über an der Außenhaut des Gebäudes angebrachte Solarzellen mit Energie versorgt werden.

Es ist die Aufgabe vorliegender Erfindung ein Fenster zur Verfügung zu stellen, mit dem ein angrenzender Verbraucher mit elektrischer Energie versorgt werden kann.

Diese Aufgabe der Erfindung wird bei dem eingangs genannten Fensterprofil dadurch gelöst, dass das Photovoltaikelement und/oder das Solarmodul zumindest teilweise in der Hohlkammer angeordnet ist. Weiter wird die Aufgabe durch das eingangs genannte Fenster gelöst, bei dem zumindest eines seiner Fensterprofile erfindungsgemäß ausgebildet ist. Von Vorteil ist dabei einerseits, dass an das Fenster anschließende bzw. darauf montierte bzw. sich im System befindliche elektrische Verbraucher, wie z.B. Rollläden oder Jalousie, welche motorbetrieben sind, unabhängig von einer Gesamtstromsversorgung des Gebäudes mit elektrischer Energie versorgt werden können. Somit ist dieses Fenster also völlig autark bzgl. seiner Energieversorgung. Es wird in der Folge damit der Vorteil erreicht, dass insbesondere im Nachrüst - und Sanierungsbereich derartige Fenster ohne aufwendige Stemmarbeiten für die Verlegung elektrischer Leitungen verwendet werden können. Aber auch im Neubaubereich lässt sich damit eine Zeitersparnis erzielen. Ein weiterer Vorteil, der erreicht wird kann, ist, dass das unter Umständen auftretende "Schwitzen" von Fenstern mit Isolierverglasung, bedingt durch die kalte, äußere und die warme, inneren Fensterscheibe, wodurch Luftfeuchtigkeit an der Fensterscheibe kondensiert, insofern vermieden bzw. beseitigt werden kann, als beispielsweise die Abstandhalter über eine Heizung, z.B. eine Widerstandsheizung wie z.B. einen Heizdraht, mit Wärmeenergie versorgt werden, wodurch das Kondenswasser zumindest schneller verdunstet werden kann. Insbesondere ist diese Beheizung der Fensterscheiben bzw. der Abstandhalter zwischen den Fensterscheiben auch bei Wintergärten von Vorteil, welche aufgrund der erhöhten Luftfeuchtigkeit im Inneren besonders ausgeprägt dieses "Schwitzen" zeigen können. Die Einbringung von Wärmeenergie kann aber auch in vorteilhafter Weise über die Beheizung der Fenster mit so genannten Solarmodulen erfolgen, wobei die Anordnung der Solarmodule im Profilkörper des Fensterprofils den Vorteil hat, dass damit die Wege für das Trägermedium für die Wärmeenergie äußerst kurz gehalten werden können, sodass praktisch keine Verlustwärme auftritt und damit die Beheizung auch bereits bei geringster Sonneneinstrahlung ermöglicht wird. Darüber hinaus ist auch in diesem Fall wiederum die direkte Anordnung von zumindest einem Solarmodul im Fensterprofil für den Nachrüst- und Sanierungsmarkt von Vorteil, da auch in diesem Falle aufwendige Verlegearbeiten für Rohrleitungen, welche unter Umständen aufgrund der baulichen Gegebenheiten gar nicht möglich sind, entfallen, sodass mit diesem neuartigen Fenster auch Altbauten ohne Probleme ausgerüstet werden können.

Da der Profilkörper als Hohlkammerprofil, insbesondere aus Kunststoff, bevorzugt aus PVC, einem faserverstärkten Kunststoff, mit zumindest einer Hohlkammer ausgebildet ist, können zumindest Teile des Photovoltaikelements bzw. des Solarmoduls bzw. gegebenenfalls angeordnete, zusätzliche Schalt- und Regel- bzw. Steuerelemente in dieser Hohlkammer unsichtbar angeordnet werden können.

Dadurch, dass das Photovoltaikelement bzw. das Solarmodul zumindest teilweise in einer Hohlkammer des Hohlkammerprofils angeordnet ist, kann auf kostengünstigere, weil nicht in Kompaktbauweise erhältliche, Photovoltaikelemente bzw. Solarmodule zurückgegriffen werden.

Es ist dabei von Vorteil, insbesondere wenn das Photovoltaikelement und/oder das Solarmodul zur Gänze in der Hohlkammer angeordnet ist, wenn der Profilkörper im Bereich des Photovoltaikelementes und/oder des Solarmoduls in einer in Einbaulage des Profilkörpers in Richtung auf die Sonne weisende Wandung zumindest einen Durchbruch aufweist, da damit ein ungehinderter Durchtritt von elektromagnetischer Strahlung direkt auf das Photovoltaikelement bzw. das Solarmodul, welcher beispielsweise bei vorhandener, transparenter Abdeckung nicht in dem Ausmaß gegeben ist, ermöglicht wird.

Von Vorteil ist es auch, wenn das Photovoltaikelement und/oder das Solarmodul zumindest teilweise im Bereich eines Glasfalzes für ein Glaselement angeordnet ist, da es damit praktisch zur Gänze vor äußerer Einflussnahme geschützt ist und zudem weitgehend die Optik des Fensters nicht störend angeordnet werden kann.

Möglich ist es auch, das Photovoltaikelement und/oder das Solarmodul zumindest teilweise dreh- und/oder verschwenkbar zu lagern, sodass eine optimale Ausrichtung gegebenenfalls motorunterstützt, auf den sich verändernden Einfallswinkel der Sonnenstrahlung ermöglicht wird.

Das Photovoltaikelement kann zur Stromübertragung induktiv mit einem Verbraucher von elektrischer Energie und/oder dem Speicherelement gekoppelt sein, wodurch die anfallende Verlustleistung gesenkt werden kann.

Gemäß einer Weiterbildung ist vorgesehen, dass in der zumindest einen Hohlkammer ein Speicherelement für elektrische bzw. thermische Energie wirkungsverbunden mit zumindest einer Solarzelle des Photovoltaikelementes bzw. zumindest einem Kollektorelement des Solarmoduls angeordnet ist, sodass die Energieversorgung auch an lichtschwachen Tagen bzw. in der Nacht gegeben ist.

Es ist weiters möglich, dass das Photovoltaikelement in einem, den Fensterflügel umgebenden Fensterrahmen und ein Verbraucher und/oder ein Speicherelement getrennt davon im Fensterflügel bzw. im das Fenster umgebenden Mauerwerk bzw. in einem Rollladenkasten angeordnet ist bzw. das Photovoltaikelement im Fensterflügel und der Verbraucher und/oder das Speicherelement im Fensterrahmen angeordnet ist und die Stromübertragung zwischen dem Photovoltaikelement und dem Verbraucher bzw. dem Speicherelement induktiv erfolgt, sodass der für den Einbau zur Verfügung stehende Raum vergrößert werden kann ohne dass eine aufwendige Verkabelung erforderlich ist und zudem Leitungsverluste entfallen.

Zum besseren Verständnis wird die Erfindung anhand der nachfolgenden Figuren näher erläutert.

Es zeigen jeweils in stark schematisch vereinfachter Darstellung:
- Fig. 1: den Querschnitt eines nicht erfindungsgemäßen Fensterprofils mit an einer äußeren Oberfläche desselben angeordnetem Photovoltaikelement;
- Fig. 2: ein Fensterprofil mit einem Photovoltaikelement in einer Ausnehmung der Wandung des Fensterprofils sowie mit einem in der Hohlkammer angeordneten Speicherelement;
- Fig. 3: einen Teil eines Fensters mit angeordneten Photovoltaikelementen sowie einer Widerstandsheizung des Abstandhalters zwischen den Fensterscheiben;

- Fig. 4: die Anordnung eines Solarmoduls in einem Fensterprofil;
- Fig. 5: einen Querschnitt durch ein Fenster mit im Glasfalzbereich bzw. im Glasfalz angeordnetem Photovoltaikelement;
- Fig. 6: einen Querschnitt durch ein Fenster in Form eines Stufenglasfensters und im Bereich des Stufenglases angeordnetem Photovoltaikelement.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

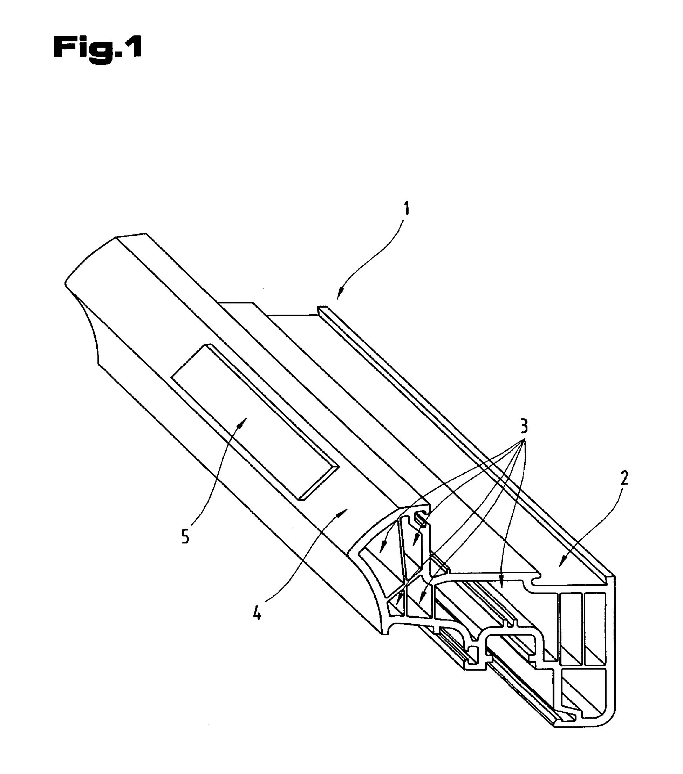

Fig. 1 zeigt einen Ausschnitt aus einem, dem derzeitigen Stand der Technik entsprechenden Fensterprofil 1, d.h. Flügelprofil. Dieses ist als Hohlkammerprofil mit einem Profilkörper 2 ausgebildet. In dem Profilkörper 2 sind mehrere Hohlkammern 3 ausgebildet. Diese bewirken, wie allgemein bekannt, eine Wärmedämmung des Fensterprofils 1 durch Unterbrechen der Wärmeleitung im Material des Profilkörpers 2. Zusätzlich kann zumindest eine der Hohlkammern 3 dem Stand der Technik entsprechend ausgeschäumt sein, um diese Wärmedämmung zu verbessern.

Der Profilkörper 2 besteht insbesondere aus PVC. Es können aber auch andere Kunststoffmaterialien zur Herstellung des Profilkörpers 2 verwendet werden.

An einer äußeren Oberfläche 4 des Profilkörpers 2 ist ein Photovoltaikelement 5 angebracht, insbesondere mit dieser Oberfläche 4 verklebt. Diese Anordnung des Photovoltaikelementes 5 ist nicht Teil der Erfindung.

Mit der Oberfläche 4 im Sinne der Erfindung ist jene Oberfläche 4 gemeint, welche in Einbaulage des Fensterprofils 1 der Sonne zugewandt ist.

Das Photovoltaikelement 5 ist dem Stand der Technik entsprechend ausgebildet und umfasst zumindest eine Solarzelle, mit der aus Sonnenlicht elektrische Energie gewonnen wird, sowie zumindest ein Wandlerelement. Die Solarzelle kann aus einem amorphen oder kristallinen Werkstoff gebildet sein, wie beispielsweise Silizium, Germanium, Metalloxide. Derartige Solarzellen auf Halbleiterbasis sind ebenfalls bereits bekannt.

Das Wandlerelement kann einerseits zur Anpassung des von den Solarzellen gelieferten Gleichstroms an die Spannungsart, Spannungsebene und gegebenenfalls Frequenz des weiter verwendeten Netzes dienen. Insbesondere bewirkt das Wandlerelement die Umwandlung der gelieferten Gleichspannung in Wechselspannung.

Es sei darauf hingewiesen, dass für den Fall, das mit dem gewonnenen Strom Gleichspannungsabnehmer, z.B. Gleichspannungsmotoren, versorgt werden, das Wandlerelement selbstverständlich entfallen und der gewonnene Strom direkt diesem Abnehmer zur Verfügung gestellt werden kann.

Da derartige Photovoltaikelement bereits bestens bekannt sind, erübrigt sich eine weitere Erörterung an dieser Stelle und sei der fachkundige Leser an die einschlägige Fachliteratur verwiesen.

Obwohl in Fig. 1 lediglich ein Photovoltaikelement 5 dargestellt ist, ist es selbstverständlich möglich mehrere dieser Photovoltaikelement 5 an besagter Oberfläche 4 anzuordnen und diese gegebenenfalls in Serie über elektrische Leitungen miteinander zu verbinden. Diese elektrischen Leitungen können einerseits durch Kabel gebildet sein, es ist aber auch möglich die "Verdrahtung" der einzelnen Photovoltaikelemente 5 über aufgedampfte Leiterbahnen herzustellen, wobei diese Leiterbahnen einerseits an dieser äußeren Oberfläche 4 aufgedampft sein können, bevorzugt jedoch in einem nicht sichtbaren Bereich, also beispielsweise in einer Hohlkammer, bzw. ist es auch möglich, derartige aufgedampfte Leiterbahnen im Glasfalzbereich der eingebauten Glaselement durch dieses abgedeckt anzuordnen. Insbesondere die verdeckten Ausführungen bieten eine Möglichkeit der berührungssicheren Anordnung dieser Leitungen.

Neben dieser Art der Stromleitung, die z.B. im Fensterrahmen oder im Fensterflügel mit Kabel oder über Leiterbahnen erfolgen kann, ist es auch möglich, diese induktiv zu bewerkstelligen, sodass also auf eine aufwendige Verdrahtung, die gegebenenfalls sogar störend ist, verzichtet werden kann.

Die Verbindung zumindest einzelner Bauteile des Photovoltaikelementes 5 kann auch über Steckkontakte, z.B. mit Stiftelementen, Buchsenelementen etc., oder induktiv erfolgen, wobei es auch möglich ist, dass durch das einfache Aufstecken der Solarzelle auf das Wandlerelement bzw. umgekehrt, die elektrische Verbindung hergestellt ist. Durch eine derartige Steckverbindung ist der Austausch von Bauteilen für Wartungen der Anlage einfacher zu gestalten.

In einer besonderen Ausführungsvariante ist es möglich, die Steckverbindungen verrastend auszuführen, sodass das unbeabsichtigte Lösen der Verbindung, beispielsweise aufgrund der Fensterbewegungen, verhindert werden kann. Diese Rastmittel können an den oder durch die Kontaktorgane(n) gebildet sein.

Von Vorteil ist es, wenn die Kontaktorgane hinter Dichtungen, z.B. Dichtlippen, angeordnet sind, um damit das Eindringen von Schutz bzw. Feuchtigkeit zumindest großteils zu vermeiden.

Die von dem Photovoltaikelement 5 gelieferte Energie kann zur Stromversorgung von Verbrauchern, welche im Bereich des Fensterprofils 1 bzw. an diesem angeordnet sind, verwendet werden. Mögliche Anwendungsfälle sind z.B. die Stromversorgung von Motoren von Rollläden, Jalousie, Markisen, Beleuchtungen, Messfühlern, motorbetriebenen Beschlägen, z.B. Verriegelungen, etc. bzw. von generell sich im System befindenden Verbrauchern, wobei als System die autarke Kombination eines erfindungsgemäßen Fensters bzw. Fensterprofils 1 mit dem Verbraucher gemeint ist. Obige Aufzählung ist daher nicht beschränkend für den Schutzumfang zu sehen.

Es wird mit dem erfindungsgemäßen Fensterprofil 1 möglich, ein völlig autarkes Fenster bereitzustellen, wie dies bereits eingangs dargestellt wurde.

Zur Erhöhung des Wirkungsgrades und der Lebensdauer des Photovoltaikelementes, insbesondere des Wandlerelementes, ist es möglich, durch die Anordnung von Öffnungen bzw. Durchbrüchen im Fensterprofil 1 zumindest im Bereich der Solarzelle für eine Hinterlüftung desselben zu sorgen. Diese Öffnung wird vorteilhafterweise so gewählt, dass Laub, Kleintiere, etc. nicht in das Innere des Rahmens eindringen können. Es ist in diesem Zusammenhang möglich, die u.U. ohnehin vorhandenen Öffnungen für den Regenwasserauslass, die z.B. bei Kunststofffenstern vorhanden sind, für diesen Zweck heranzuziehen, und diese z.B. größer zu dimensionieren, wobei wiederum ein luftdurchlässige Abdeckung aus obigen Gründen angeordnet werden kann, bzw. mehr Öffnungen als alleine für den Abfluss des Regenwassers erforderlich sind, anzuordnen.

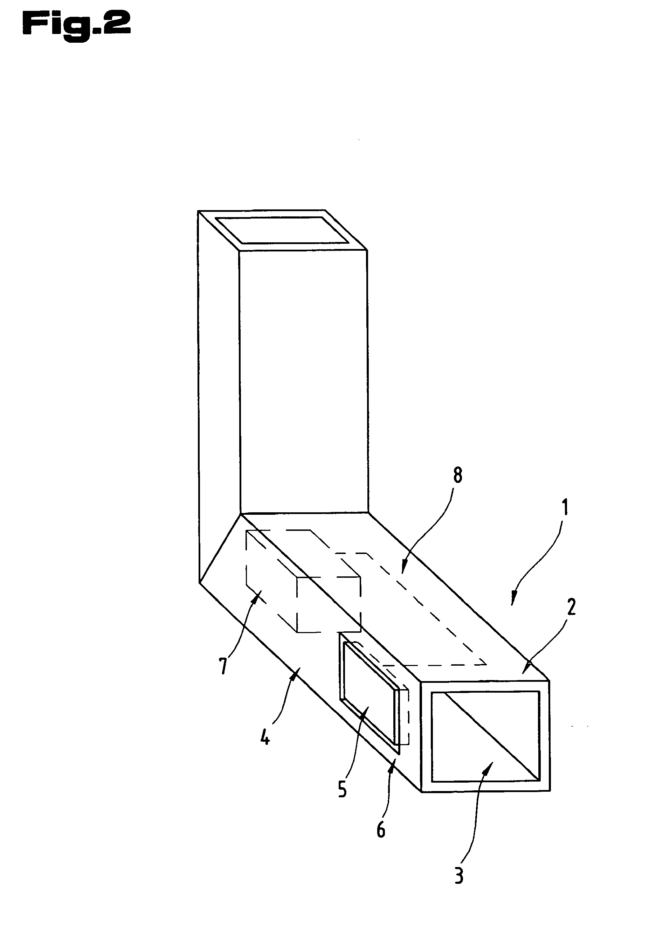

In Fig. 2 ist eine weitere Variante des Fensterprofils 1 dargestellt, wobei gleiche Bauteile mit gleichen Bezugszeichen versehen sind. Der Einfachheit halber wurde der Profilkörper 2 des Fensterprofils 1 mit quadratischem Querschnitt und lediglich einer Hohlkammer 3 dargestellt, wobei darauf hingewiesen sei, dass dies selbstverständlich nicht beschränkend für diese Ausführungsvariante bzw. die folgenden Ausführungsvarianten verstanden werden darf. Selbstverständlich können bei dieser Ausführungsvariante der Erfindung sämtliche Hohlkammerprofile mit beliebigen Querschnitten verwendet werden. Darüber hinaus ist es im Rahmen der Erfindung auch möglich, anstelle von Hohlkammerprofilen aus Kunststoff solche aus Metall zu verwenden. Eine Aluminiumschale ist selbstverständlich bei Fensterprofilen 1 aus Kunststoff anordenbar. In diesem Fall ist es vorteilhaft, wenn zumindest einzelne Bauteile des Photovoltaikelementes hinter der Aluminiumschale von dieser abgedeckt angeordnet werden.

Generell sei darauf hingewiesen, dass sowohl das bzw. die Photovoltaikelement(e) 5 als auch das bzw. die Solarmodul(e) zumindest teilweise in und/oder innerhalb und/oder auf dem Rahmen des Fensters und/oder dem Flügelprofil angeordnet sein können, wobei sich deren Anzahl auch nach der Anzahl der zu versorgenden Verbrauchern richten kann, d.h. dem zu erwartenden Energiebedarf.

Bei dieser Variante ist das Photovoltaikelement 5 in einer Ausnehmung 6 in der äußeren Oberfläche 4 des Profilkörpers 2, der z.B. aus Kunststoff, Metall und/oder Holz bestehen kann, angeordnet. Diese Anordnung des Photovoltaikelementes 5 ist nicht Teil der Erfindung. Diese Ausnehmung 6 kann selbstverständlich auch durchgängig als so genannter Durchbruch ausgebildet sind.

Im Inneren des Profilkörpers 2 ist in der Hohlkammer 3 ein Speicherelement 7 vorgesehen, welches mit dem Photovoltaikelement 5 über eine Leitung 8 leitungsverbunden ist. Das Speicherelement 7 kann beispielsweise als Akkumulator ausgebildet sein, sodass überschüssige, elektrische Energie, welche mit dem Photovoltaikelement 5 gewonnen wird, in diesem Speicherelement 7 für einen späteren Bedarf zwischengespeichert werden kann. Es ist damit möglich, Verbraucher auch während Nachtzeiten, also wenn keine Sonne scheint, bzw. zu Zeiten, in denen Himmel bewölkt ist, mit elektrischer Energie zu versorgen.

Das Photovoltaikelement 5 kann in dieser Ausnehmung 6 wiederum mit der Oberfläche 4 des Profilkörpers 2 verklebt sein. Selbstverständlich können auch andere Befestigungsmethoden, wie beispielsweise Verschweißen, Verschrauben, etc., Anwendung finden. Es ist generell bei sämtlichen Ausführungsvarianten der Erfindung möglich, das Photovoltaikelement 5, bzw. generell die Elemente bzw. Module zur Energiegewinnung bzw. -speicherung mittels Clips durch einfaches Aufclipen zu befestigen, sodass diese z.B. für Wartungsarbeiten oder im Fall eines Defekts einfach ausgetauscht werden können. Diese Clips können dabei als separates Befestigungsmittel verwendet werden, ebenso ist es möglich, dass diese an den Elementen bzw. Modulen z.B. angeformt sind.

Die selben Befestigungsmethoden stehen selbstverständlich auch für das Speicherelement 7 zur Verfügung, wobei dieses Speicherelement 7 im Fall eines zumindest teilweise ausgeschäumten Hohlkammerprofils auch über die Ausschäumung in der Hohlkammer 3 befestigt werden kann.

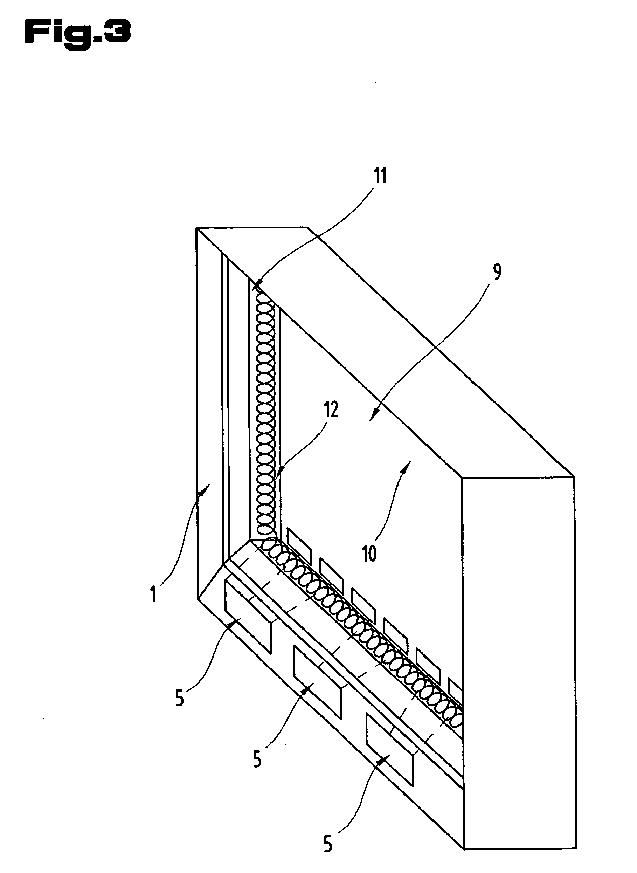

In Fig. 3 ist ein Fenster 9 ausschnittweise dargestellt, wobei dieses Fenster 9 ein Glaselement 10, z.B. eine Verbundglasscheibe mit zwei oder mehreren Fensterscheiben, sowie die Fensterprofile 1, welche das Glaselement 10 haltern, aufweist. In bzw. an bzw. zumindest teilweise innerhalb des Fensterprofils 1 sind mehrere Photovoltaikelement 5 angeordnet, die miteinander wiederum leitungsverbunden sind, um damit eine Serienschaltung herzustellen, wobei gegebenenfalls wiederum das zumindest ein Speicherelement (in Fig. 3 nicht dargestellt) zur Speicherung der elektrischen Energie angeordnet sein kann. Die gewonnene elektrische Energie wird zur Beheizung eines Abstandhalters 11, der beispielsweise aus Aluminium oder Edelstahl gefertigt sein kann und zwischen den Glasscheiben des Glaselementes 10, wie aus dem Stand der Technik bekannt, angeordnet ist, verwendet. Insbesondere bei Verbundglasfenstern stellt sich die Problematik, dass aufgrund der Edelgasfüllung zwischen den beiden Glasscheiben zur Wärmedämmung Luftfeuchtigkeit aus dem Rauminneren eines Hauses aufgrund des Temperaturabfalls nach außen hin, kondensieren kann. Dies ist insbesondere bei Wintergärten zu beobachten, da in Wintergären normalerweise aufgrund der vorhandenen Pflanzen die Luftfeuchtigkeit bedeutend höher ist als die Raumluftfeuchtigkeit in einem Wohnraum. Um dieses Kondensieren der Luftfeuchtigkeit zu vermeiden, ist es möglich, diesen Abstandhalter 11 zu beheizen. Die Beheizung kann dabei über zumindest ein Heizelement 12, beispielsweise in Form eines Drahtes, der z.B. als Widerstandsheizung ausgeführt ist, erfolgen, wobei die elektrische Energie über die Photovoltaikelemente 5 gewonnen wird bzw. in Nachtzeiten aus den Speicherelementen 7 zur Verfügung gestellt wird.

Neben der Beheizung des Abstandhalters 11 oder zusätzlich dazu ist es auch möglich, den Verbundvorsatzflügel bzw. das Glas selbst zu beheizen.

Ein anderer Anwendungsfall der Erfindung, der in den Figuren nicht dargestellt ist, ist die Ausbildung eines so genannten Schallschutzfensters. Es ist nämlich möglich, mit Hilfe von piezoelektrischen Elementen einen Gegenschall zu erzeugen, sodass mit dem auf die Fensterscheibe sowie den Fensterrahmen auftreffenden Schallwellen eine Interferenz erzeugt wird und sich damit der Schall sozusagen "totläuft". Um diese piezoelektrische Elemente mit elektrischer Energie zu versorgen, können erfindungsgemäß die Photovoltaikelemente 5 herangezogen werden.

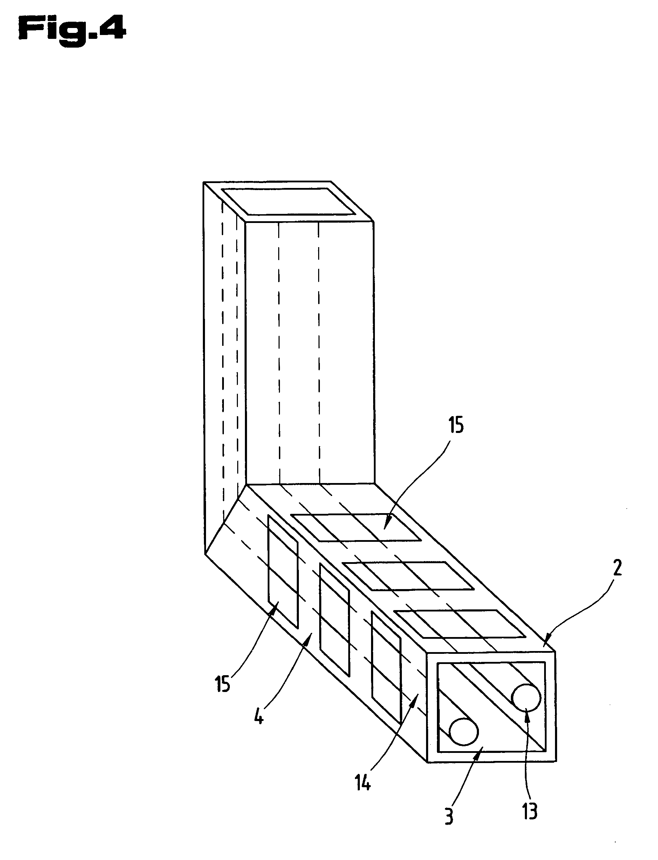

In Fig. 4 ist eine Ausführungsvariante der Erfindung dargestellt. Bei dieser ist innerhalb des Profilkörpers 2 in der Hohlkammer 3 ein Solarmodul 13 in Form von fluidführenden Leitungen 14, insbesondere aus Kupfer, angeordnet. Diese Solarmodule 13 können in ähnlicher Weise, wie dies für die Wärmegewinnung in Form von Solarmodulen für Dächer bekannt ist, ausgebildet sein. Um eine Sonneneinstrahlung auf die Rohrleitungen 14 und damit eine Erwärmung des Wärmeträgerfluids innerhalb der Rohrleitung 14 zu ermöglichen, können zumindest an der äußeren Oberfläche 4 des Profilkörpers 2 Durchbrüche 15 ausgebildet sein, wobei diese Durchbrüche 15 auch mit einem insbesondere transparenten Kunststoff oder Glas abgedeckt sein können. Letztere können eine Oberflächenprofilierung aufweisen, um das einfallende Licht zu brechen und damit den Wirkungsgrad durch die diffuse Einstrahlung zu erhöhen. Wie strichliert in Fig. 4 dargestellt, ist es möglich, diese Durchbrüche 15 verteilt über die gesamte Oberfläche 4 des Fensterprofils anzuordnen, um damit eine möglichst großflächige Sonnenbestrahlung der Rohrleitungen 14 zu erreichen.

Obwohl nicht dargestellt, ist es bei dieser Ausführungsvariante der Erfindung möglich, innerhalb des Profilkörpers 2 in der Hohlkammer 3 zumindest ein Speicherelement für Fluide für die gewonnen Wärmeenergie anzuordnen, um diese Energie zeitversetzt zur Verfügung stellen zu können.

Die Wärmeenergie kann beispielsweise wiederum benutzt werden, um nicht nur den Fensterrahmen selbst zu erwärmen bzw. zu beheizen, sondern die bereits angeführten Abstandhalter von Isolierglasscheiben und Verbundscheiben.

Es ist selbstverständlich möglich, die Speicherelemente 7, sollte diese aus Platzgründen oder aus sonstigen Gründen nicht möglich sein, innerhalb des Fensterprofils anzuordnen, diese vorab bei Einbau des Fensters 9 z.B. im Mauerwerk in einer entsprechenden Ausnehmung die dafür hergestellt werden muss, zu versenken bzw. ist es möglich, diese Speicherelemente in den Hohlkammern der heute üblicherweise verwendeten Hohlkammerziegeln anzuordnen. Insbesondere können diese Speicherelemente 7 unterhalb der äußeren oder inneren Fensterbank angeordnet werden. Darüber hinaus ist es möglich, derartige Speicherelemente 7 in aus dem Stand der Technik bekannten Rollladenkästen anzuordnen. Es sollte jedoch gewährt sein, eine Wirkungsverbindung zwischen den Photovoltaikelementen 5 bzw. Solarmodulen 13 und diesen Speicherelementen 7 herstellen zu können, um die Autarkie des Fensters 9 zu gewährleisten.

Selbstverständlich ist es möglich, dass hinter diesen Durchbrüchen 15 nach der Ausführungsvariante nach Fig. 4 anstelle bzw. zusätzlich zu dem Solarmodul 13 zumindest ein Photovoltaikelement 5 angeordnet ist. Dies trifft selbstverständlich auf alle Ausführungsvarianten der Erfindung zu. Es ist damit z.B. möglich mit der aus dem Photovoltaikelement 5 gewonnen elektrischen Energie eine Pumpe des Solarkreislaufes anzutreiben.

Es ist alternativ möglich insbesondere die Photovoltaikelemente 5, d.h. zumindest die Solarzelle des Photovoltaikelements 5, in bzw. auf bzw. innerhalb des Fensterprofils 1 dreh- und/oder verschwenkbar zu haltern, sodass damit eine automatische Nachführung der Solarzelle an die "wandernde" Sonne durchgeführt werden kann und damit eine optimale Energieausbeute erhalten wird. Zu dieser Nachführung kann beispielsweise innerhalb des Fensterprofils 1 ein Motor angeordnet werden, wobei dieser Motor beispielsweise von der über die Photovoltaikelemente 5 gewonnenen Energie versorgt wird, bzw. aus dem entsprechenden Speicherelementen 7.

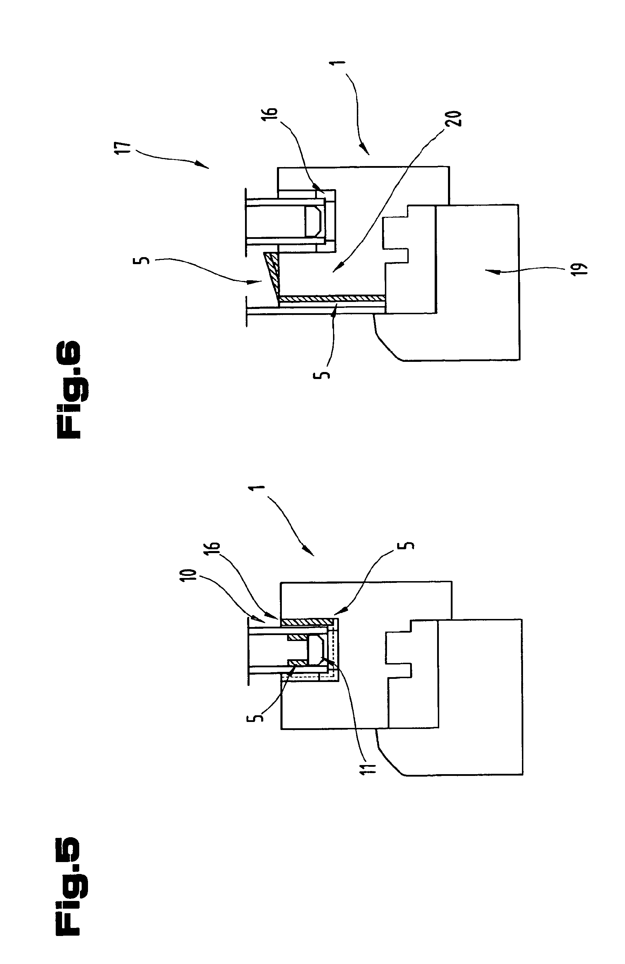

In Fig. 5 ist gezeigt, dass es weiters möglich ist, das zumindest eine Photovoltaikelement 5 und/oder das Solaimodul 13 in einem Glasfalzbereich 16 des Fensterprofils 1 anzuordnen. Dieser Glasfalz dient wie bekannt der Aufnahme des Glaselementes 10 und ist beispielsweise als Nut im Profilkörper 2 ausgebildet. Es ist damit möglich, das Photovoltaikelement 5 und/ oder das Solarmodul 13 zumindest großteils von außen unsichtbar anzuordnen und damit eine bessere Optik und Verkaufbarkeit eines mit dem Fensterprofils 1 ausgestatteten Fensters 9 zu erreichen. Von Vorteil ist es dabei, wenn das Photovoltaikelement 5 und/oder das Solarmodul 13 innerhalb dieses Glasfalzes in jenem Bereich angeordnet ist, welcher in Einbaulage des Fensterrahmensprofils 1 dem Raum zugewandt ist, also beispielsweise bei Ausbildung des Glasfalzes in Form einer Nut, in bzw. an der senkrechten, raumseitig angeordneten Wandung dieser Nut.

Selbstverständlich kann das zumindest eine Photovoltaikelement 5 und/oder das Solarmodul 13 auch beidseitig im Glasfalzbereich 16, also an beiden senkrechten Wandungen der Nut, und/oder im Bereich des Bodens der Nut angeordnet werden.

Wie weiters in Fig. 5 dargestellt, ist es möglich das zumindest eine Photovoltaikelement 5 und/oder das Solarmodul 13 alternativ oder zusätzlich im Inneren einer Verbundglasscheibe im Glasfalzbereich 16 und im Bereich des Abstandhalters 11 in der in Fig. 5 gezeigten Weise anzuordnen, wobei die Anordnung einseitig aber auch zweiseitig erfolgen kann. Diese Anordnung des Photovoltaikelementes 5 ist nicht Teil der Erfindung

Fig. 6 zeigt schließlich eine Variante des Einbaus von Photovoltaikelementen 5 in einem so genannten Stufenglasfenster 17. Dabei ist ein Verbundglas im Glasfalzbereich 16 des Fensterprofils 1 angeordnet und ein Stufenglas 18 diesem außen liegend vorgeordnet, wobei das Stufenglas 18 zumindest den Glasfalzbereich 16, vorzugsweise jedoch auch zumindest einen Teil des Fensterprofils 1 in Richtung auf einen Fensterrahmen 19 in einem Überdeckungsbereich 20 überdeckt. Das zumindest eine Photovoltaikelement 5 und/oder Solarmodul 13 (in Fig. 6 nicht dargestellt) ist in diesem Überdeckungsbereich zwischen dem Verbundglas und dem Stufenglas 18 angeordnet, sodass dieses zum einen vor äußeren Einflüssen geschützt ist, und zu anderen eine möglichst großflächige Sonnenbestrahlung durch das Stufenglas 18 erfolgen kann.

Wie in Fig. 6 dargestellt, ist neben oder zusätzlich zu der zumindest annähernd senkrechten Anordnung des Photovoltaikelements 5 auch ein schräge oder waagrechte Anordnung möglich, bzw. können weitere Photovoltaikelemente 5 und/oder Solarmodule 13 im oder am Glasfalzbereich 16 oder im Verbundglas entsprechend der Ausführung nach Fig. 5 (nicht dargestellt) angebracht sein.

Zur besseren Nutzung der einfallenden Sonnenstrahlung ist es weiters möglich bei dieser und bei sämtlichen anderen Abwandlungen und Ausführungsvarianten der Erfindung, das zumindest eine Photovoltaikelement 5 und/oder Solarmodul 13 sich durchgehend über den gesamten Fensterrahmen bzw. das gesamte Flügelprofil, d.h. das Fensterprofil 1 erstreckend anzuordnen bzw. zumindest über einen Großteil der in Frage kommenden Oberflächen.

Neben dem nachträglichen Einbau des Photovoltaikelements 5 bzw. seiner Komponenten und/oder des Solarmoduls 13 bzw. dessen Komponenten in das bereits fertige Fensterprofil 1 ist es auch möglich, dass diese Komponenten bereits während der Herstellung des Fensterprofils 1, insbesondere mit einem Extrusionsverfahren oder einem Spritzgussverfahren, an diesem angeordnet werden. Dabei können in einem Extrusionsprozess, bei dem eine Schmelze bekanntlich durch eine die Konturen des Fensterprofils 1 aufweisende Düse gepresst wird, diese Elemente bzw. Module nach Verlassen dieser Düse in die noch warme, insbesondere heiße, Oberfläche des Profilkörpers 2 manuell bzw. maschinell eingepresst werden, sodass bei der insbesondere nachfolgenden Kalibrierung des Fensterprofils 1 aufgrund der Temperaturerniedrigung und der damit verbundenen Schrumpfung des Materials ein fester Halt des Photovoltaikelementes 5 und/oder Solarmoduls 13 an dem Fensterprofil 1 ermöglicht wird.

Darüber hinaus ist es im Fall eines Spritzgussverfahrens möglich, diese einzelnen Komponenten, insbesondere die Solarzelle und/oder das Photovoltaikelement 5 bzw. das Kollektorelement und/oder Solarmodul 13 in eine entsprechende Form für das Fensterprofil 1 einzulegen und nachfolgend mit dem Material für das Fensterprofil zumindest teilweise zu umspritzen, sodass auch in diesem Fall wiederum ein fester Halt innerhalb des Fensterprofils 1 ermöglicht wird.

Abschließend sei noch erwähnt, dass neben der Verwendung von Kunststoffen, wie z.B. PVC, faserverstärkten Kunststoffen, beispielsweise Fibrex, Polyolefinen, etc., es auch möglich ist, erfindungsgemäß andere Werkstoffe, wie z.B. Holz, Metall, extrudierbare bzw. spritzbare Holzwerkstoffe, sowie Mischungen daraus zu verwenden.

Es sei weiters noch erwähnt, dass das zumindest eine Photovoltaikelement 5 und/oder das Solarmodul 13 sowie die zugehörenden weiteren Bauteile und -elemente auch nachträglich in bereits bestehende Fenster bzw. Rahmen bzw. Profile der Erfindung entsprechend einzubauen, sodass also die Erfindung für alle Werkstoffe in diesem Bereich verwendet werden kann. Ebenso ist es möglich für den nachträglichen Einbau Vorsatzschalen, z.B. aus Aluminium, zu verwenden, wobei zumindest einzelne der Bauteile und -elemente zwischen der Vorsatzschale und dem Rahmen bzw. Profil des Fensters angeordnet werden können, sodass damit auch eine Revision von außen erfolgen kann.

Generell soll noch erwähnt werden, dass das Photovoltaikelement 5 und/oder das Solarmodul 13 sowie die zugehörenden weiteren Bauteile und -elemente im und/oder innerhalb des Fensterrahmens und/oder Profils des Fensterflügels angeordnet werden.

Der Ordnung halber sei abschließend darauf hingewiesen, dass zum besseren Verständnis des Aufbaus des Fensterprofils 1 bzw. Fensters 9 dieses bzw. deren Bestandteile teilweise unmaßstäblich und/oder vergrößert und/oder verkleinert dargestellt wurden.

### Bezugszeichenaufstellung

- 1: Fensterprofil
- 2: Profilkörper
- 3: Hohlkammer
- 4: Oberfläche
- 5: Photovoltaikelement

- 6: Ausnehmung
- 7: Speicherelement
- 8: Leitung
- 9: Fenster
- 10: Glaselement

- 11: Abstandhalter
- 12: Heizelement
- 13: Solarmodul
- 14: Rohrleitung
- 15: Durchbruch

- 16: Glasfalzbereich
- 17: Stufenglasfenster
- 18: Stufenglas
- 19: Fensterrahmen
- 20: Überdeckungsbereich

## Patentansprüche

1. Fensterprofil (1) mit einem Profilkörper (2) und zumindest einem Photovoltaikelement (5) und gegebenenfalls einem Solarmodul (13), das auf dem oder zumindest teilweise in dem oder zumindest teilweise innerhalb des Profilkörper(s) (2) angeordnet ist, wobei der Profilkörper (2) als Hohlkammerprofil mit zumindest einer Hohlkammer (3) ausgebildet ist, **dadurch gekennzeichnet, dass** das Photovoltaikelement (5) und/oder das Solarmodul (13) zumindest teilweise in der Hohlkammer (3) angeordnet ist.

2. Fensterprofil (1) nach Anspruch 1, **dadurch gekennzeichnet, dass** das Hohlkammerprofil aus Kunststoff, bevorzugt aus PVC, einem faserverstärkten Kunststoff, besteht.

3. Fensterprofil (1) nach Anspruch 1, **dadurch gekennzeichnet, dass** der Profilkörper (2) im Bereich des Photovoltaikelements (5) und/oder des Solarmoduls (13) in einer in Einbaulage des Profilkörpers (2) in Richtung auf die Sonne weisende Wandung zumindest einen Durchbruch (15) aufweist.

4. Fensterprofil (1) nach einem der Ansprüche 1 bis 3, **dadurch gekennzeichnet, dass** das Photovoltaikelement (5) und/oder das Solaimodul (13) zumindest teilweise im Bereich eines Glasfalzes für ein Glaselement (10) angeordnet ist.

5. Fensterprofil (1) nach einem der vorhergehenden Ansprüche, **dadurch gekennzeichnet, dass** das Photovoltaikelement (5) und/oder das Solarmodul (13) zumindest teilweise dreh- und/oder verschwenkbar gelagert ist.

6. Fensterprofil (1) nach einem der vorhergehenden Ansprüchen, **dadurch gekennzeichnet, dass** das Photovoltaikelement (5) zur Stromübertragung induktiv mit einem Verbraucher von elektrischer Energie und/oder dem Speicherelement (7) gekoppelt ist.

7. Fensterprofil (1) nach einem der Ansprüche 1 bis 6, **dadurch gekennzeichnet, dass** in der zumindest einen Hohlkammer (3) ein Speicherelement (7) für elektrische bzw. thermische Energie wirkungsverbunden mit zumindest einer Solarzelle des Photovoltaikelements (5) bzw. zumindest einem Kollektorelement des Solarmoduls (13) angeordnet ist.

8. Fenster (9) mit einem Glaselement (10) und zumindest einem Fensterprofil (1), **dadurch gekennzeichnet, dass** zumindest ein Fensterprofil (1) nach einem der vorhergehenden Ansprüche ausgebildet ist.

9. Fenster (9) nach Ansprüche 8, **dadurch gekennzeichnet, dass** das Photovoltaikelement (5) in einem, den Fensterflügel umgebenden Fensterrahmen (19) und ein Verbraucher oder ein Speicherelement (7) im Fensterflügel oder im das Fenster (9) umgebenden Mauerwerk oder in einem Rollladenkasten angeordnet ist, und die Stromübertragung zwischen dem Photovoltaikelement (5) und dem Verbraucher bzw. dem Speicherelement (7) induktiv erfolgt.

10. Fenster (9) nach einem der Ansprüche 8 oder 9, **dadurch gekennzeichnet, dass** das Photovoltaikelement (5) im Fensterflügel und der Verbraucher oder das Speicherelement (7) im Fensterrahmen (19) angeordnet ist, und die Stromübertragung zwischen dem Photovoltaikelement (5) und dem Verbraucher bzw. dem Speicherelement (7) induktiv erfolgt.

## Claims

1. A window profile (1) with a profile body (2) and at least one photovoltaic element (5) and, if applicable, a solar module (13), which is arranged on, or at least partially in, or at least partially within, the profile body (2), wherein the profile body (2) is designed as a hollow chamber profile with at least one hollow chamber (3), **characterised in that**, the photovoltaic element (5) and/or the solar module (13) is at least partially arranged in the hollow chamber (3).

2. The window profile (1) in accordance with Claim 1, **characterised in that**, the hollow chamber profile consists of plastic, preferably of PVC, a fibre-reinforced plastic.

3. The window profile (1) in accordance with Claim 1, **characterised in that**, the profile body (2) in the region of the photovoltaic element (5) and/or the solar module (13) has at least one opening (15) in a wall pointing in the direction towards the sun when the profile body (2) is installed.

4. The window profile (1) in accordance with one of the Claims 1 to 3, **characterised in that**, the photovoltaic element (5) and/or the solar module (13) is at least partially arranged in the region of a rebate for a glass element (10).

5. The window profile (1) in accordance with one of the preceding claims, **characterised in that**, the photovoltaic element (5) and/or the solar module (13) is at least partially mounted such that it can be rotated and/or pivoted.

6. The window profile (1) in accordance with one of the preceding claims, **characterised in that**, for purposes of power transfer the photovoltaic element (5) is inductively coupled with a load consuming electrical energy and/or the storage element (7).

7. The window profile (1) in accordance with one of the Claims 1 to 6, **characterised in that**, in the at least one hollow chamber (3) a storage element (7) for electrical and/or thermal energy is arranged such that it is actively connected with at least one solar cell of the photovoltaic element (5) and/or at least one collector element of the solar module (13).

8. A window (9) with a glass element (10) and at least one window profile (1), **characterised in that**, at least one window profile (1) is designed in accordance with one of the preceding claims.

9. The window (9) in accordance with Claim 8, **characterised in that**, the photovoltaic element (5) is arranged in a window frame (19) surrounding the casement, and a consuming load or a storage element (7) is arranged in the casement, or in the masonry surrounding the window (9), or in a shutter housing, and the power transfer between the photovoltaic element (5) and the consuming load and/or the storage element (7) takes place inductively.

10. The window (9) in accordance with one of the Claims 8 or 9, **characterised in that**, the photovoltaic element (5) is arranged in the casement, and the consuming load or the storage element (7) is arranged in the window frame (19), and the power transfer between the photovoltaic element (5) and the consuming load and/or the storage element (7) takes place inductively.

## Revendications

1. Profilé de fenêtre (1), comportant un corps profilé (2) et au moins un élément photovoltaïque (5) et, le cas échéant, un module solaire (13), qui est disposé sur le corps profilé (2) ou au moins partiellement dans celui-ci ou au moins partiellement à l'intérieur de celui-ci, ledit corps profilé (2) étant réalisé sous la forme d'un profilé à chambre creuse avec au moins une chambre creuse (3), **caractérisé en ce que** l'élément photovoltaïque (5) et/ou le module solaire (13) sont disposés au moins partiellement dans la chambre creuse (3).

2. Profilé de fenêtre (1) selon la revendication 1, **caractérisé en ce que** le profilé à chambre creuse est réalisé en matière plastique, de préférence en PVC, dans une matière plastique renforcée par des fibres.

3. Profilé de fenêtre (1) selon la revendication 1, **caractérisé en ce que**, dans la zone de l'élément photovoltaïque (5) et/ou du module solaire (13), le corps profilé (2) comporte au moins une percée (15) dans une paroi orientée vers le soleil dans la position de montage du corps profilé (2).

4. Profilé de fenêtre (1) selon l'une quelconque des revendications 1 à 3, **caractérisé en ce que** l'élément photovoltaïque (5) et/ou le module solaire (13) sont disposés au moins en partie dans la zone d'une rainure pour un élément en verre (10).

5. Profilé de fenêtre (1) selon l'une quelconque des revendications précédentes, **caractérisé en ce que** l'élément photovoltaïque (5) et/ou le module solaire (13) sont montés au moins en partie de manière rotative et/ou pivotante.

6. Profilé de fenêtre (1) selon l'une quelconque des revendications précédentes, **caractérisé en ce que** l'élément photovoltaïque (5), en vue de la transmission du courant, est couplé de manière inductive à un consommateur d'énergie électrique et/ou à l'élément de stockage (7).

7. Profilé de fenêtre (1) selon l'une quelconque des revendications 1 à 6, **caractérisé en ce que** dans ladite au moins une chambre creuse (3) est disposé un élément de stockage (7) pour l'énergie électrique ou thermique, lequel est relié fonctionnellement à au moins une cellule solaire de l'élément photovoltaïque (5) ou à au moins un élément collecteur du module solaire (13).

8. Fenêtre (9), comportant un élément en verre (10) et au moins un profilé de fenêtre (1), **caractérisée en ce qu'**au moins un profilé de fenêtre (1) est réalisé selon l'une quelconque des revendications précédentes.

9. Fenêtre (9) selon la revendication 8, **caractérisée en ce que** l'élément photovoltaïque (5) est disposé dans un cadre de fenêtre (19) entourant le vantail de la fenêtre, et un consommateur ou un élément de stockage (7) est disposé dans le vantail de fenêtre ou dans la maçonnerie entourant la fenêtre (9) ou dans un caisson de volet roulant, et la transmission du courant est effectuée sous forme inductive entre l'élément photovoltaïque (5) et le consommateur ou l'élément de stockage (7).

10. Fenêtre (9) selon la revendication 8 ou 9, **caractérisée en ce que** l'élément photovoltaïque (5) est disposé dans le vantail de fenêtre et le consommateur ou l'élément de stockage (7) est disposé dans le cadre de fenêtre (19), et la transmission du courant est effectuée sous forme inductive entre l'élément photovoltaïque (5) et le consommateur ou l'élément de stockage (7).
